# EUROPÄISCHE PATENTANMELDUNG

(11) **EP 4 657 318 A1**
(43) Veröffentlichungstag der Anmeldung: **03.12.2025**
(21) Anmeldenummer: 25177938.5
(22) Anmeldetag: 21.05.2025
(51) Int. Cl.: G06N 3/045, G06N 3/0475, G06F 40/35, G06Q 50/18

(54) **COMPUTERIMPLEMENTIERTES VERFAHREN ZUR MASCHINENSTEUERUNG**

(30) Priorität: 21.05.2024 DE 102024114199
(71) Anmelder: predori GmbH, 89075 Ulm (DE)
(72) Erfinder: Brehm, Stefan, 89075 Ulm (DE); Schmitz, Konstantin, 89075 Ulm (DE)
(74) Vertreter: noventive Patentanwaltsgesellschaft mbH

(57) **Zusammenfassung**

Computerimplementiertes Verfahren, welches zumindest die folgenden von einem oder mehreren Servern durchgeführten Schritte umfasst:
(a) Empfangen einer Aufgabenstellung von einem Client;
(b) Verarbeiten der Aufgabenstellung durch einen ersten Agent, der als Maschinenlernmodell ausgebildet ist, um ein Abfrageergebnis zu erzeugen, wobei das Verarbeiten umfasst:
(i) Auswählen eines Lösungsoperators für zumindest einen zum Verarbeiten der Aufgabenstellung geeigneten Verarbeitungsschritt; wobei das Auswählen zumindest teilweise basierend auf einer textuellen Beschreibung der Fähigkeit des Lösungsoperators erfolgt;
(ii) Veranlassen, dass der ausgewählte Lösungsoperator den zumindest einen Verarbeitungsschritt zu Zwischenergebnissen verarbeitet;
(iii) Anwenden eines Zustandsindikators umfassend:
I) Zurückempfangen der vom Lösungsoperator erzeugten Zwischenergebnisse durch den ersten Agent und Beurteilen der Zwischenergebnisse durch den ersten Agent dahingehend, ob die Aufgabenstellung gelöst ist und, falls die Aufgabenstellung nicht gelöst ist, erneutes Durchführen der Schritte (i) bis (iii), oder
II) setzen der Annahme, dass die Aufgabenstellung gelöst ist;

(iv) Erstellen des Abfrageergebnisses durch den ersten Agent; und

(c) Bereitstellen des Abfrageergebnisses an den Client.

## Beschreibung

### TECHNISCHES GEBIET

Die vorliegende Erfindung betrifft allgemein das Gebiet der Steuerung von Maschinen durch maschinellen Verarbeitung von Aufgabenstellungen durch Agentensysteme, insbesondere Agentensysteme aus Computernetzen.

### HINTERGRUND

Mittels Maschinenlernmodellen lassen sich, vor allem auf der Grundlage natürlichsprachiger Eingaben, Aufgaben eines Benutzers bequem verarbeiten. So können vor allem große Sprachmodelle (englisch: Large Language Models, kurz LLM) Fragen von Benutzern mit einem hohen Maß an Nutzerfreundlichkeit durch die natürlichsprachige Eingabe beantworten. Auf Basis eines geeigneten Maschinenlernmodells können jedoch nur jene Aufgaben bearbeitet werden, die sich auf Basis statistischer Beziehungen ergeben.

Aus der WO2023237635A1 ist ein Verfahren zur Steuerung eines Agenten, der mit seiner Umgebung interagiert, um eine Aufgabe zu erfüllen bekannt. Ein hochrangiges Eingangssignal wird verarbeitet, um ein hochrangiges Beobachtungsmuster zu generieren, das mittels eines hochrangigen Controller-Neuronalen Netzwerks in ein hochrangiges Richtlinienmuster umgewandelt wird, das ein Zielmuster charakterisiert. Gleichzeitig wird die Beobachtung und die Zielrepräsentation mittels eines niedrigrangigen Controller-Neuronalen Netzwerks verarbeitet, um ein niedrigrangiges Richtlinienmuster zu generieren, das eine Aktion definiert, die vom Agenten als Reaktion auf die Beobachtung ausgeführt werden soll. Das System kann entscheiden, ob der Agent mittels des niedrigrangigen Controllers oder mittels einer primitiven Aktion, die durch das hochrangige Richtlinienmuster identifiziert wird, gesteuert werden soll. Die Technologie ermöglicht die automatische Steuerung eines mechanischen Agenten, der Protein-Faltungsaktionen oder chemische Syntheseschritte ohne menschliche Interaktion durchführt.

Aus der US20230376697A1 ist ein System zur Verbesserung des Dialogmanagements in Open-Domain-Konversationen mithilfe von Hierarchical Reinforcement Learning (HRL) und Mixture-of-Experts Language Models (MoE-LM) bekannt. Das System verarbeitet Sprachrepräsentationen mit einer Vielzahl von maschinenlernenden Sprachmodellen, um Kandidatenäußerungen zu generieren. Es adressiert die Herausforderung großer Zustands- und Aktionsräume in Markov Decision Processes (MDP) durch die Verwendung einer Architektur, die die Größe der Räume effektiv bewältigt.

Nachteilhaft ist bei bisher bekannten Architekturen, dass Nutzereingaben stets in einer hierarchielosen Architektur verarbeitet werden. Dies führt einerseits zu Nachteilen bei der Erklärbarkeit von Antworten, andererseits ist die Komplexität einer Nutzereingabe statisch an die vorhandene Komplexität und Lösungsfähigkeit eines Systems gebunden. Ein weiterer Nachteil besteht in der aufwändigen Selbstverwaltung des Systems, was Hardware- und Software Ressourcen unnötigerweise bindet.

Ausgehend vom Stand der Technik haben sich die Erfinder nun die Aufgabe gestellt, ein computerimplementiertes Verfahren zur Maschinensteuerung zu schaffen, mit dem bestehende Nachteile überwunden werden.

### ZUSAMMENFASSUNG DER ERFINDUNG

Diese Aufgabe wird durch die in den unabhängigen Ansprüchen definierten Gegenstände gelöst. Vorteilhafte Weiterbildungen von Ausführungsformen der vorliegenden Erfindung sind in den abhängigen Ansprüchen sowie in der Beschreibung und den Zeichnungen definiert.

Gemäß der Erfindung wir ein computerimplementiertes Verfahren angegeben, welches zumindest die folgenden von einem oder mehreren Servern durchgeführten Schritte umfasst:
(a) Empfangen einer Aufgabenstellung von einem Client;
(b) Verarbeiten der Aufgabenstellung durch einen ersten Agent, der als Maschinenlernmodell ausgebildet ist, um ein Abfrageergebnis zu erzeugen, wobei das Verarbeiten umfasst:
   (i) Auswählen eines Lösungsoperators für zumindest einen zum Verarbeiten der Aufgabenstellung geeigneten Verarbeitungsschritt; wobei das Auswählen zumindest teilweise basierend auf einer textuellen Beschreibung der Fähigkeit des Lösungsoperators erfolgt;
   (ii) Veranlassen, dass der ausgewählte Lösungsoperator den zumindest einen Verarbeitungsschritt zu Zwischenergebnissen verarbeitet;
   (iii) Anwenden eines Zustandsindikators umfassend:
      I) Zurückempfangen der vom Lösungsoperator erzeugten Zwischenergebnisse durch den ersten Agent und Beurteilen der Zwischenergebnisse durch den ersten Agent dahingehend, ob die Aufgabenstellung gelöst ist und, falls die Aufgabenstellung nicht gelöst ist, erneutes Durchführen der Schritte (i) bis (iii), oder
      II) setzen der Annahme, dass die Aufgabenstellung gelöst ist;
   (iv) Erstellen des Abfrageergebnisses durch den ersten Agent; und
(c) Bereitstellen des Abfrageergebnisses an den Client.

Demnach werden Aufgabenstellungen, die beispielsweise ein Maschinenbediener vorgibt, in einem agentenbasierten System strukturiert abgearbeitet. Die Aufgabenstellung erfolgt vorzugsweise in natürlicher Sprache oder mittels vordefinierter Aufgabensettings, die vorzugsweise Platzhaltervariablen aufweisen, oder einer Kombination aus vordefinierten Aufgabensettings und in natürlicher Sprache. Ein Aufgabensetting kann beispielsweise eine via Prompt vordefinierte Aufgabe sein. Ein Prompt ist ein kurzer Satz oder Text, der von einem Benutzer, insbesondere einem Administrator, eingegeben wird, um eine Konversation mit dem Agentensystem, das dem Verfahren zu Grunde liegt, zu initiieren. Eine exemplarische Aufgabenstellung kann beispielsweise lauten: "Führe eine Übersichtsrecherche zum Thema Fahrräder mit elektroantrieben durch". Hierbei formuliert ein Nutzer seine Aufgabe also in eigenen Worten, ohne sich dabei einer Maschinensprache zu bedienen. Ein exemplarisches Aufgabensetting lautet: "Finde den nächstgelegenen Stand der Technik", wobei hier als Ausgangssituation bekannt ist für was dieser nächstliegende Stand der Technik zu ermitteln ist. Sollte dies beispielsweise nicht zweifelsfrei bekannt sein, kann das vorgenannte Aufgabensetting mit einer Platzhaltervariablen versehen sein, deren Inhalt noch durch den Bediener zu anzugeben ist. So müsste der Bediener in diesem Fall angeben, zu welchem Dokument hier die nächstgelegenen Stand der Technik recherchieren lassen möchte. Aufgabensettings werden somit idealerweise als vordefinierte Frage abgelegt und über eine grafische Nutzeroberfläche für den Bediener bereitgestellt. Ferner liegen Aufgabensettings vorteilhafterweise in natürlicher Sprache vor.

Die Aufgabenstellung wird durch einen Client, der ein Programm ist, das Dienste eines Servers in Anspruch nehmen kann, beispielsweise ein Webbrowser, von einem Bediener empfangen und an einen Agent weitergeleitet. Ein Client ist also die Kommunikationsschnittstelle zwischen dem Bediener und dem Server.

Der Agent empfängt die Benutzereingabe und wandelt diese in eine Maschinenanweisung um, um die Aufgabenstellung mittels Lösungsoperatoren zu lösen. Eine Maschinenanweisung ist in diesem Sinne eine Anweisung mit der Lösungsoperatoren Lösungsoperationen durchführen können.

Das Auswählen eines Lösungsoperators erfolgt, ohne weitere Analyse der Lösungswegplanung, wie in vorteilhaften Ausführungsformen angegeben, indem der Agent basierend auf der Aufgabenstellung den geeignetsten Lösungsoperator wählt. Es ist hierfür zunächst unerheblich, ob der gewählte Lösungsoperator die Aufgabe vollständig oder nur teilweise lösen kann, sondern der gewählte Lösungsoperator ist geeignet einen ersten Verarbeitungsschritt vorzunehmen.

Ein Verarbeitungsschritt ist eine Intermaschinenanweisung, die ein Agent oder ein zur Weiterleitung von Verarbeitungsschritten befähigter Lösungsoperator an einen Lösungsoperator sendet, um ihn mit einer Aufgabe zu betrauen. Ein Verarbeitungsschritt ist ein Teil der notwendigen Arbeiten, um eine von einem Bediener gegebene Aufgabenstellung zu lösen.

Die Auswahl des für den aktuellen Stand der Beantwortung geeignetsten Lösungsoperators trifft der Agent basierend auf einer textuellen Beschreibung, insbesondere einer natürlichsprachigen Beschreibung, der Fähigkeiten des Agenten. Ein exemplarisches Beispiel hierfür ist: "Dieser Lösungsoperator ist geeignet, Patentdokumente hinsichtlich technischer Merkmale zu analysieren; insbesondere kann der Lösungsoperator mehrere Dokumente zum Beurteilen von Neuheit vergleichen".

Nach der Auswahl des Lösungsoperators, erhält dieser vom Agenten den aus der Aufgabenstellung abgeleiteten Auftrag oder Teilauftrag. Dies stellt somit die Umwandlung einer Nutzereingabe in Form einer Frage oder einer Anweisung in eine Maschinenanweisung zur Intermaschinenkommunikation dar. Vorteilhafterweise ist der Agent eingerichtet, zu erkennen, dass keiner der ihm zur Verfügung stehenden Lösungsoperatoren für den Verarbeitungsschritt geeignet ist. In diesem Fall kann der Agent einen Lösungsoperator, der zum Erstellen von Lösungsoperatoren geeignet ist, anweisen den fehlenden Lösungsoperator zu erzeugen, dem Bediener über den Client die Information geben, dass die Aufgabenstellung nicht bearbeitet werden kann, weil er hierzu außer Stande ist, oder gemeinsam mit dem zur Erzeugung von Lösungsoperatoren geeigneten Lösungsoperator und dem Bediener, vorzugsweise einem Bediener auf Administratorenniveau, einen Lösungsoperator erzeigen lassen.

Die Formulierung der Maschinenanweisung des Agenten an den Lösungsoperator ist vorteilhafterweise natürlichsprachig und leitet sich sprachlogisch von der Aufgabenstellung ab.

Ein Server kann jede Hardware oder Software sein, die Clients Dienste anbietet. Darüber hinaus kann ein Server auch eine Gruppe von mehreren Servern sein (Server-Cluster).

Der Lösungsoperator liefert dann die Zwischenergebnisse, für die zunächst unklar ist, ob diese bereits die Grundlage schaffen, die Aufgabenstellung zu erfüllen. Im einfachsten Fall war die Aufgabenstellung ausreichend einfach oder der Lösungsoperator potent genug, die Aufgabenstellung allein zu lösen. In jedem Fall wird der Agent die Zwischenergebnisse aber zurückempfangen und beurteilen, ob die Aufgabe gelöst ist oder nicht. Nun gibt es drei potenzielle als Maschinenzustände der Architektur.

Der erste Zustand ist, dass die Aufgabenstellung vom Agenten als gelöst erachtet wird. Dann wird er die Zwischenergebnisse zu Abfrageergebnissen verarbeiten, oder, falls keine weitere Verarbeitung notwendig ist, die Zwischenergebnisse als Abfrageergebnisse deklarieren.

Der zweite Zustand ist, dass die Aufgabenstellung vom Agenten als noch nicht gelöst erachtet wird. Dann wird der Agent erneut einen Lösungsoperator auswählen, der die verbleibenden Teilaufgabenstellung vollständig oder teilweise bearbeiten kann. An dieser Stelle weist das computerimplementierte Verfahren somit eine Schleife auf, die so oft durchlaufen wird, bis der Agent auf Basis des Zwischenergebnis oder die Zwischenergebnisse aller bemühten Lösungsoperatoren betrachtend die Aufgabe als erfüllt erachtet. Aufeinanderfolgende Lösungsoperatoren bekommen bei Bedarf die Zwischenergebnisse vorangegangener Lösungsoperatoren im angewiesenen Verarbeitungsschritt. Ein Beispiel hierfür ist, wenn ein Lösungsoperator zum Zusammentragen von passenden Dokumenten geeignet ist und ein anderer Lösungsoperator diese Dokumente inhaltlich analysieren kann. Ein Sonderfall tritt ein, wenn der Agent die Zwischenergebnisse für unzureichend hält, beispielsweise, wenn er erkennen muss, dass der gewählte Lösungsoperator zwar zunächst geeignet erschien, den Verarbeitungsschritt zu lösen, am Ende aber maschinelle Einschränkungen aufweist, die zu unzureichenden Ergebnissen führen. Ein Beispiel hierfür ist, wenn der Lösungsoperator deklariert ist Patentrecherchen mit Datumsfiltern durchzuführen, jedoch nicht zwischen unterschiedlichen Datumsformaten unterscheiden kann. Der Agent wird, wenn er den Mangel der Zwischenergebnisse erkennt, die Zwischenergebnisse verwerfen und nach einem geeigneteren Lösungsoperator suchen, da er nun eine spezifischere Maschinenanweisung geben kann.

Der dritte Zustand ist, dass der Agent die Zwischenergebnisse a priori als zutreffend erachtet, die Aufgabenstellung zu lösen. Dann wird er ohne inhaltliche Beurteilung der Zwischenergebnisse die Annahme treffen, dass die Aufgabenstellung gelöst ist. Anders formuliert kann der Agent autonom entscheiden, ob aufgrund der von ihm gegebenen Anweisung zur durchführen eines Verarbeitungsschrittes an einen Lösungsoperator und der erwarteten Art der Zwischenergebnisse überhaupt noch eine Inhaltskontrolle notwendig ist. Ein Beispiel für einen derartigen Fall ist nachfolgend skizziert:
1. Ein Bediener gibt über einen Client die natürlichsprachige Aufgabe "Stelle mir das Patentdokument ABC 123" bereit"
2. Der Agent erhält die Aufgabe und betreibt die Planung der Lösung
3. Der Agent leitet aus der Aufgabenstellung einen Verarbeitungsschritt ab, den er wie folgt formuliert: "Führe eine Patentrecherche mit einer Patentnummernrestriktion durch, welche lautet ABC 123"
4. Der Agent geht die ihm zur Verfügung stehenden Lösungsoperatoren durch und prüft, ob er über einen geeigneten Lösungsoperator verfügt
5. Der für die Verarbeitung geeignete Lösungsoperator wird mit dem Verarbeitungsschritt aus 3. beauftragt, wobei der Agent bereits jetzt davon ausgehen kann, dass das Dokument, welches er als Zwischenergebnis erhält, das gefragt Dokument ist. Er trifft also die Annahme, dass Zwischenergebnisse, wenn sie denn vorliegen, korrekt sind und keine inhaltliche Beurteilung notwendig sein wird.
6. Der Lösungsoperator erhält entsprechend seiner Funktionsbeschreibung die Nummer des Patentdokuments natürlichsprachig oder in Form eines Funktionsaufrufes und führt die Recherche durch
7. Der Agent erhält als Zwischenergebnis das Dokument ABC123 wendet die Annahme der Lösung der Aufgabenstellung an und reicht das Dokument ABC an den Client weiter.

Ein Zustandsindikator ist also eine Maschinenanweisung, die anzeigt, ob eine Aufgabenstellung gelöst ist oder als gelöst gilt. Basierend auf dieser Anzeige kann das System weitere Schritte, beispielsweise die Erstellung von Abfrageergebnissen oder weitere Verarbeitungsschritte, unternehmen.

Abfrageergebnisse sind entweder die von den Lösungsoperatoren bereitgestellten Daten in unverarbeiteter Form oder in verarbeiteter Form. Verarbeitung bedeutet in diesem Zusammenhang, dass die bislang als Inter- und Intramaschinendaten verfügbaren Zwischenergebnisse für Benutzer aufbereitet werden. Die unverarbeiteten Daten sind demnach Daten, die in ihrer Rohform als Abfrageergebnis bereitgestellt werden können.

Eine Besonderheit ergibt sich, wenn im Zuge des Systemausbaus mehrere wie hier angegebene Agenten- und/ oder Multiagentensysteme zusammengesetzt werden. Dann können auch verarbeitete Zwischenergebnisse als Maschinenanweisung aufgefasst werden.

Vorteilhaft ist an dieser Stelle der Systemarchitektur, dass Maschinenanweisungen von einem Agent an einen Lösungsoperator mit der Aufgabenstellung und den Zwischenergebnissen korrelieren, sodass Aufgaben, auch komplexe Aufgaben, die die Fähigkeiten von mehr als einen Lösungsoperator benötigen, effizient gelöst werden können. Gleichfalls werden durch das Setzen der Annahme vollständiger Lösung Hardware- und Softwareressourcen geschont. Demnach liegt ein technischer Vorteil des Verfahrens in der optimierten Nutzung von Hardware- und Softwareressourcen, was sich in einer kürzeren Rechenzeit, einem geringeren Speicherbedarf und einem geringeren Energieverbrauch äußert. Durch Konfiguration, insbesondere durch natürlichsprachige Konfiguration kann die Freiheit des Agenten, anzunehmen, dass die Aufgabenstellung gelöst ist, eingeschränkt werden. So kann eine Restriktion zum Beispiel lauten: "Führe für alle inhaltlichen Fragen eines Bedieners eine inhaltliche Beurteilung des Zwischenergebnisses durch" oder "Nimm grundsätzlich an, dass Aufgaben korrekt gelöst sind".

Zwischenergebnisse werden im Plural verwendet, um anzuzeigen, dass sich mehrere einzelne Zwischenergebnisse mehrerer Agenten gegenseitig vervollständigen können. Gleichfalls kann ein einzelner Lösungsoperator auch mehrere Zwischenergebnisse liefern. Vorstellbar ist aber, dass in Abhängigkeit des Verarbeitungsschrittes ein Lösungsoperator nur ein Zwischenergebnis liefern wird.

Von einem ersten Agenten wird im Zusammenhang der Erfindung deshalb gesprochen, weil es noch weitere Agenten geben kann, was in den vorteilhaften Ausführungsformen näher erläutert wird.

Der Agent ist vorteilhafterweise ein großes Sprachmodell oder ein neuronales Netz. Im Falle eines großen Sprachmodells kann der Agent selbst bereits eine interne Systemarchitektur aufweisen, was allgemein als Assistent bezeichnet wird, oder mittels Promptanweisungen zum Agenten befähigt werden. Die Promptanweisungen beinhalten einen kanonischen oder unkorrelierten Satz von natürlichsprachigen Anweisungen, wie der Agent mit Fragen, aufkommenden Problemen oder Anweisungen umzugehen hat. Somit bezieht sich die Ausbildung des Agenten als Maschinenlernmodell darauf, dass er geeignet ist, durch vorheriges Training, durch Training während der Laufzeit oder durch Training in Form von Prompts, die dem Agenten zugeführt werden, unterschiedliche Aufgaben zu lösen.

Ein Lösungsoperator kann als Objekt verstanden werden, das über die für die Lösung des Verarbeitungsschrittes notwendige Eigenschaft oder die notwendigen Eigenschaften verfügt.

Verglichen mit anderen Systemarchitekturen von Agentensystemen lässt die Architektur des für das erfindungsgemäße Verfahren verwendeten Systems Inter- und Intramaschinenanweisungen in natürlicher Sprache zu. Zugleich können aber in Abhängigkeit der verfügbaren Lösungsoperatoren auch nicht natürlichsprachige, also beispielsweise in Maschinensprache, abgefasste Aufgaben verteilt werden. Dies ermöglicht eine effizientere Einbindung von Systemen zur Sprachverarbeitung wie großen Sprachmodellen in komplexe Lösungsverfahren.

Ein weiterer technischer Vorteil ist die variable Hierarchie des Systems, welche entweder so flach sein kann, dass der erste Agent zwar als erster Aufruf unter den Lösungsoperatoren ausgezeichnet ist, aber Hierarchisch nicht über den Lösungsoperatoren steht. Dies hat den Vorteil, dass mehrere ansonsten disjunkte oder zumindest partiell unterschiedlich ausgestatte Systeme zusammengeschaltet werden können. Im Falle einer strikten Hierarchie ergibt sich hingegen der Vorteil, dass Aufgaben in, verglichen mit einer flachen Hierarchie, eindeutigeren Lösungspfaden abgearbeitet werden können, da der Lösungsraum der potenziell verfügbaren Lösungsoperatoren beschränkter ist.

Gemäß einer Ausführungsform der Erfindung ist der Lösungsoperator ein weiterer Agent, der als Maschinenlernmodell ausgebildet ist, wobei der weitere Agent seinerseits den Verfahrensschritt (b) gemäß der Erfindung durchführen kann.

Somit bildet sich ein System mehrerer Agenten aus, wobei der erste Agent den zweiten Agenten basierend auf seinen, vorteilhafterweise natürlichsprachigen, Fähigkeiten auswählen kann. Der weitere Agent kann dann, die dem Verarbeitungsschritt entsprechende Aufgabe seinerseits an geeignete Lösungsoperatoren, auf die er Zugriff hat, lösen.

Der technische Vorteil dieser Architektur liegt somit in der einfacheren Zusammenfassung gleichartiger Fähigkeiten unterhalb eines Agenten, der über diese Fähigkeiten in Form von Lösungsoperatoren verfügt. Für den weiteren Agenten gelten dieselben technischen Ausgestaltungsmöglichkeiten, wie für den erfindungsgemäßen ersten Agenten, so kann dieser insbesondere ein großes Sprachmodell sein. Ein nicht beschränkendes Beispiel für ein derartiges Multiagentensystem ist der Zusammenschluss
- des ersten Agent,
- einem als Agent ausgestalteten Lösungsoperator, der unter sich Lösungsoperatoren zur Suche von Patentdokumenten zusammenfasst, und
- einem als Agent ausgestalteten Lösungsoperator, der unter sich Lösungsoperatoren zur inhaltlichen Analyse von Patentdokumenten zusammenfasst.

Die Systemarchitektur kann vorteilhafterweise so gestaltet sein, dass ein höherliegender Agent, hiermit ist keine Über- und Unterordnung im hierarchischen Sinne gemeint, sondern ein Agent, der entlang des Lösungspfades vorangestellt ist, die Lösungsoperatoren der nachfolgenden als Agenten Ausgebildeten Lösungsoperatoren einsehen kann, um die Potenz der verfügbaren als Agenten ausgebildeten Lösungsoperatoren zu beurteilen.

Der technische Vorteil von Multiagentensystemen entsprechend der Ausführungsform ist, dass diese aufgrund der Systemarchitektur beliebig auf neue Aufgabenstellungen angepasst werden können. So kann beispielsweise an ein bislang nur zur Recherche nach Dokumenten ausgelegtes System ein System zur Analyse und ein System zum Generieren von Dokumenten angeschossen werden, wobei diese aufgrund der vorgeschlagenen Architektur keine direkte Verknüpfung untereinander benötigen, sondern sich autonom aufgrund ihrer beschriebenen Fähigkeiten als Lösungsoperatoren auswählen.

Alternativ oder zusätzlich zu jedweden anderen Arten von Lösungsoperatoren, also Agenten oder Computerfunktionen, kann als Lösungsoperator ein beliebiger menschlicher Bediener oder der Bediener von einem Agent, beispielsweise dem ersten Agent, mit einer Aufgabe betraut werden. Anders formuliert, kann der Lösungsoperator ein Mensch sein, dessen Fähigkeitsprofil vorab bekannt ist, oder während des Verfahrens abgefragt wird, um vom Bediener Zwischenergebnisse zu einem Verarbeitungsschritt einzufordern. So werden auch Fähigkeiten, die Bediener aufweisen, in die Lösung eingebunden. Demnach wird von der Maschine erkannt, dass für die Lösung notwendige Fähigkeiten nicht in maschineller, sondern in menschlicher Intelligenz vorliegen, sodass die Maschine den Nutzer auffordert, einen Verarbeitungsschritt, dessen Zwischenergebnisse zur weiteren Maschinensteuerung benötigt werden, vorzunehmen. Vom Nutzer wird also ein für die Lösung notwendiger Input verlangt, sodass das Verfahren weiter durchlaufen werden kann, um zu einer Gesamtlösung zu kommen, die dem Bediener dann als Output bereitgestellt wird. Vorteilhafterweise erfolgt die Aufgabenstellung auch an den Bediener in natürlicher Sprache. Neben dem einzelnen Bediener, dessen Fragestellung über den Client an den Server gesendet wurde, können auch weitere Bediener vorgesehen sein, die dann über eine Grafische Benutzeroberfläche mittels des Clients beauftragt werden Ihren Beitrag zur Lösung zu leisten. Die Fähigkeiten dieser weiteren Bediener können ebenfalls in natürlicher Sprache beschrieben sein, sodass der Agent, insbesondere der erste Agent, diese in die Planung des Lösungsweges einbinden kann.

Gemäß einer weiteren Ausführungsform der Erfindung steht der weitere Agent hierarchisch unter demjenigen Agent, der den weiteren Agent als Lösungsoperator ausgewählt hat, oder wobei der weitere Agent hierarchisch neben demjenigen Agent steht, der den weiteren Agent als Lösungsoperator ausgewählt hat.

Im Falle der hierarchischen Unter- und Überordnung ist der weitere Agent demnach dem davorstehenden Agenten der den weiteren Agenten als Lösungsoperator ausgewählt hat, aufgrund der hierarchischen Unterordnung, zur Rückmeldung und Rechenschaft verpflichtet. Zwischenergebnisse werden somit an den beauftragenden Agenten zurückgegeben. Das Verarbeiten der Aufgabenstellung und die Weiterbeauftragung anderer als Agenten ausgebildeter Lösungsoperatoren ist daher ausgeschlossen. Diese Hierarchie hat den technischen Vorteil, dass die Planung der Lösungsstrategie immer von der höheren Ebene übernommen wird, die darunterliegende Ebenen mit Teilaufgaben beauftragt. Das Durchreichen an noch tiefere Ebenen ist anders als das horizontale weiterreichen möglich.

Im Falle der hierarchischen Nebenordnung der als Agenten ausgebildeten Lösungsoperatoren können diese Aufgaben horizontal und nach unten weiterreichen oder Zwischenergebnisse nach oben zurückgeben. Das System, welches dem Verfahren zugrunde liegt, weist somit mehr Freiheitsgrade auf als im Falle der hierarchischen Unter- und Überordnung. Der technische Effekt liegt hierbei vor allem im geringeren Ressourcenverbrauch, weil das Reporting in Richtung nach oben entfällt.

Denkbar ist, dass ein Multiagentensystem sowohl über hierarchisch unter- und übergeordnete Teilsysteme aber auch über hierarchisch nebengeordnete Teilsysteme verfügt. Ein exemplarisches System ist eines, bei dem der erste Agent hierarchisch nebengeordnet zu einem Kontrollagenten angeordnet ist und der erste Agent hierarchisch übergeordnet zu einem Multiagentensystem umfassend Rechercheagenten, Analyseagenten und Dokumentenerzeugungsagenten angeordnet ist. In diesem Fall können die Recherche-Analyse und Erzeugungssysteme untereinander Aufgaben weiterreichen, das als erste vom ersten Agenten beauftragte Teilsystem ist jedoch am Ende zur Rechenschaft verpflichtet. Der nebengeordnete Kontrollagent kann Zwischenergebnisse und Abfrageergebnisse inhaltlich überprüfen.

Denkbar ist auch, der Zusammenschluss mehrerer Agenten- und/oder Multiagentensysteme zu einem Supersystem, insbesondere zum Erweitern der Fähigkeiten, sodass das Verfahren auf weitere Aufgabenstellungen angewendet werden kann.

Von besonderem Vorteil ist die Nebenordnung oder Überordnung eines Kontrollagenten, da dieser autonom überprüfen kann, ob Aufgaben eines Bedieners zutreffend, inhaltlich korrekt und vor allem wahrheitsgetreu verarbeitet wurden. Somit wird, vor allem bei der Verwendung großer Sprachmodelle, das Fabulieren von Antworten nachhaltig verhindert.

Gemäß einer weiteren Ausführungsform der Erfindung ist das Maschinenlernmodell des ersten Agent und/ oder das Maschinenlernmodell des weiteren Agent ein großes Sprachmodell oder ein neuronales Netz.

Ein großes Sprachmodell ist ein künstlich intelligentes System, das auf maschinellem Lernen basiert und große Mengen an Textdaten nutzt, um Sprache zu verstehen, zu generieren und zu verarbeiten. Es funktioniert, indem es Muster und Strukturen in den Trainingsdaten erkennt und darauf basierend Vorhersagen für die nächste Wortfolge oder andere sprachliche Aufgaben trifft. Ein neuronales Netz hingegen ist ein künstliches Modell, das von der Funktionsweise des menschlichen Gehirns inspiriert ist und aus miteinander verbundenen Knoten, den sogenannten Neuronen besteht, die in Schichten organisiert sind. Es funktioniert, indem es Eingabedaten durch diese Schichten verarbeitet, wobei jede Verbindung gewichtet ist und die Gewichte durch Training angepasst werden, um Muster und Beziehungen in den Daten zu lernen und Vorhersagen zu treffen. Der Unterschied zwischen einem großen Sprachmodell und einem neuronalen Netz wird so gesehen, dass ein neuronales Netz ein allgemeines Modell zur Datenverarbeitung ist, während ein großes Sprachmodell eine spezialisierte Anwendung eines neuronalen Netzes ist, die auf Sprachverarbeitung und -generierung trainiert wurde.

Gemäß einer weiteren Ausführungsform der Erfindung ist der Lösungsoperator eine Computerfunktion.

Eine Computerfunktion ist im Vergleich zu einem Agenten nicht in der Lage, Entscheidungen über die Lösungsstrategie, also den Lösungsweg, zu treffen, sondern hat Funktionen, die für die Lösung notwendig sind, statisch vorliegen. Computerfunktionen haben aber den Vorteil großer Spezifizität innerhalb Ihrer Lösungsmöglichkeiten. Vorteilhafterweise werden die Fähigkeiten, die ein als Computerfunktion ausgebildeter Lösungsoperator aufweist, mittels natürlicher Sprache angegeben, sodass ein Agent sich diesen Fähigkeiten selektiv bedienen kann. Ein Lösungsoperator kann aber dennoch, wenn ihm dies algorithmisch vorgegeben wurde, andere Lösungsoperatoren aufrufen, sodass auch mehrere Lösungsoperatoren ohne zwischengeschalteten Agenten interagieren können. Gleichfalls ist es möglich, dass ein Agent einen Lösungsoperator, der die algorithmische Befähigung zum Aufrufen weiterer als Computerfunktion ausgebildete Lösungsoperatoren besitzt, anweist, die erzeugten Zwischenergebnisse an einen weiteren als Computerfunktion ausgebildeten Lösungsoperator zu senden. Hierbei spricht man vom Kaskadieren von Verarbeitungsschritten, was, da der Agent nicht mit jedem Zwischenergebnis belastet wird, abermals Hardware- und Softwareressourcen schont.

Gemäß einer weiteren Ausführungsform der Erfindung ist der Lösungsoperator selbst Wert des Zwischenergebnisses.

Demnach wird als Bestandteil der Zwischenergebnisse angegeben, welche Lösungsoperatoren mit der Lösung betraut waren. Somit kann durch den Agenten nachvollzogen werden, welche Lösungsoperatoren bei der Lösung mitgewirkt haben. Dies ermöglicht Agenten die inhaltliche Beurteilung und Plausibilisierung von Resultaten. Gleichfalls stellt dies eine technische Vorkehrung dar, um Bedienern die Lösungsstrategie auf der Maschinenebene darzustellen, sodass auch auf Bedienerebene eine Inhaltskontrolle möglich ist.

Gemäß einer weiteren Ausführungsform der Erfindung werden als Zwischenergebnisse Fähigkeitsprofile der Lösungsoperatoren zurückgegeben, mittels denen der Agent die generelle Lösbarkeit der Aufgabenstellung beurteilen kann, noch bevor mit der tatsächlichen Bearbeitung der Aufgabenstellung begonnen wird.

Demnach ermittelt ein Agent ausgehend von der ihm gegebenen Aufgabenstellung oder ausgehend vom ihm zugewiesenen Verarbeitungsschritt, ob die Aufgabe generell lösbar ist, indem er die Fähigkeiten der Lösungsoperatoren abfragt. Besteht eine Aufgabenstellung beispielsweise aus den Teilaufgaben A, B und C, so formuliert der erste Agent einen oder mehrere Verarbeitungsschritte, die die Teilaufgaben beinhalten. Nun prüft der erste Agent jeweils, ob er über mindestens einen für jede der Teilaufgaben geeigneten Lösungsoperator verfügt, indem er sich dessen Fähigkeitsprofile, also die maschinelle oder textuelle Beschreibung der Fähigkeiten, zurückgeben lässt. Im Falle, dass als Lösungsoperator ein Agent gewählt wurde, kann dieser innerhalb der ihm zur Verfügung stehenden Lösungsoperatoren ebenfalls Lösungsprofile erfragen. Letztendlich kann somit die generelle Lösbarkeit einer Aufgabenstellung beurteilt werden, noch ehe mit der tatsächlichen Lösung begonnen wird.

Dies spart, vor allem, wenn absehbar ist, dass die zu lösende Aufgabe aufwändig ist, Hard- und Softwareressourcen.

Sollte sich ergeben, dass eine Aufgabe nicht vollständig Lösbar ist, kann der erste Agent als Abfrageergebnis die Antwort geben, dass die Aufgabe nicht vollständig lösbar ist und gegebenenfalls weitere Informationen durch den Benutzer einfordern.

Gemäß einer weiteren Ausführungsform der Erfindung umfasst das Verarbeiten der Aufgabenstellung durch den ersten Agent das Planen eines globalen Lösungspfades, noch bevor das Auswählen ein Lösungsoperators erfolgt, wobei der Lösungspfad von den durch den ersten Agenten erwarteten Abfrageergebnissen ausgehend rückwärts geplant wird, oder, wobei der Lösungspfad von einem ersten Verarbeitungsschritt ausgehend vorwärts geplant wird.

Alternativ oder zusätzlich zum Einholen von Fähigkeitsprofilen kann der erste Agent somit losgelöst von bekannten Fähigkeitsprofilen eine Planung der Lösung erstellen. Besonders vorteilhaft ist es nun, wenn die Planung mit den tatsächlich verfügbaren Lösungsfähigkeiten verglichen wird, um etwaige Differenzen zu bestimmen.

Von besonderer Bedeutung für die Laufzeitoptimierung und somit für die Schonung von Hard- und Softwareressourcen ist die Richtung der Planung. Für auf großen Sprachmodellen basierende Agenten hat es sich als Vorteil erwiese, von vorne also von der Aufgabenstellung zur Lösung hinzuplanen. Für neuronale Netze hat es sich als Vorteilhaft erwiesen, von den Abfrageergebnissen her rückwärts zur Fragestellung zu planen. Generell liegt der technische Effekt in der Laufzeitoptimierung bei Vorwärtsplanung und der Ergebnisoptimierung bei Rückwärtsplanung. Etwaige Unfähigkeiten treten bei komplexen Systemen häufig auf einer tieferen Ebene auf, sodass sich die Rückwärtsplanung anbietet. Bei geringer Komplexität ist mit etwaigen Unfähigkeiten auf höherer Ebene zu rechnen, sodass es zur Ressourcenschonung effizienter ist, vorwärtszuplanen.

Gemäß einer weiteren Ausführungsform der Erfindung, ist der erste Agent geeignet, Informationen, die der Aufgabenstellung nicht entnommen werden können, aber zur Bearbeitung der Aufgabenstellung notwendig sind, von einem Bediener einzuholen, insbesondere derart, dass dem Bediener ein Vorschlag unterbreitet wird, wie die fehlenden Informationen durch den ersten Agent oder den weiteren Agent eingeholt werden könnten.

Im Lichte der vorgenannten Planung der Lösungsstrategie kann in der Inter- und Intramaschinenkommunikation festgestellt werden, dass die notwendigen Informationen nicht vorliegen. Dieses Maschinenereignis kann daraufhin mit der Aufforderung zur Eingabe oder Angabe der notwendigen Informationen an den Bediener kommuniziert werden. Die gewünschte und vom Agenten in Abhängigkeit der Fragestellung technische Wirkung des Systems kann dem Verfahren nach somit nicht erzeugt werden, sodass weitere Maschinenanweisungen einzuholen sind.

Gemäß einer weiteren Ausführungsform der Erfindung ist das Maschinenlernmodell des ersten Agenten und/ oder das Maschinenlernmodell des/ der weiteren Agenten geeignet, Zwischenergebnisse einer Plausibilitätsprüfung zu unterziehen, wobei im Falle unplausibler Zwischenergebnisse die Lösungsoperatoren, die diese Zwischenergebnisse geliefert haben, inhaltlich begutachtet und berichtigt werden können oder Problemstellen an einen übergeordneten Administrator mittels einer Informationswiedergabevorrichtung kommuniziert werden.

Somit sind alle oder ein Teil der Agenten so eingerichtet, dass der Inhalt von Zwischenergebnissen, oder sogar auf höchster Ebene das Abfrageergebnis, plausibilisiert werden kann. Plausibilisieren bedeutet, dass eine maschinelle Inhaltskontrolle stattfindet, wobei insbesondere geprüft wird, ob sich das Zwischenergebnis oder das Abfrageergebnis, nachfolgend vereinfacht als Ergebnis beschrieben, den Regeln der Logik nach plausibel ergibt. Hierzu ein Beispiel: Ein als Agent ausgebildeter Lösungsoperator liefert das Zwischenergebnis, dass Aristoteles ein Mensch sei und alle Menschen fliegen können. Als Referenz liefert der Lösungsoperator auch die zitierten Textstellen, in denen steht "Manche Menschen wie beispielsweise Aristoteles haben besondere Fähigkeiten." und "Zu den Besonderen Fähigkeiten von Vögeln, die von Menschen gehalten werden, zählt, dass sie fliegen können." Hier ergibt sich ein Bruch in der Logik, da im zweiten Satz zwar auf besondere Fähigkeiten und Menschen eingegangen wird, aber nicht, dass Menschen fliegen können. Der Agent erfüllt die Plausibilitätsprüfung mathematisch, vor allem, wenn er als neuronales Netz ausgebildet ist, oder sprachlich, wenn er als großes Sprachmodell ausgebildet ist. Bei der sprachlichen Prüfung kann das Sprachmodell die Zitatstellen und das Zwischenergebnis mit der Intermaschinenanweisung erhalten, zu prüfen, ob die Aussage stimmt. Dem Sprachmodell wird also mittels Prompten die Anwendung von Aussagelogik abverlangt.

Ein besonderer technischer Vorteil liegt hierbei nun darin, dass Logikbrüche frühzeitig erkannt werden, sodass auf Maschinenebene, noch bevor mit weiteren Rechenoperationen begonnen wird, eine Korrektur verlangt werden kann. Ist diese Korrektur nicht möglich, beispielsweise, weil der den Logikbruch liefernde Lösungsoperator eine bei gleichen Eingabevariablen stets dieselben Ausgabevariablen liefert, kann der entsprechende Lösungsoperator vom darüberliegenden Agenten oder von einem hierfür spezialisierter Agenten überarbeitet werden. Die Anweisung zur Überarbeitung wird vorteilhafterweise natürlichsprachig gegeben. Alternativ oder zusätzlich kann die Korrektur auch durch einen Maschinenbediener, insbesondere durch einen Bediener mit Fähigkeiten das System zu administrieren, vorgenommen werden.

Unfähigkeiten, Aufgabenstellungen hinreichend zu bearbeiten können unabhängig davon, wann diese Erkannt werden, ob also eine Planung der Lösungsstrategie erfolgt oder nicht, wie Logikbrüche behandelt werden. Somit können bislang unlösbare Aufgaben durch das System gelöst werden, in dem sich das System durch einen seiner Agenten oder durch mehrere Agenten selbst neue Lösungsoperatoren erzeugt, die geeignet sind die Fehlenden Verarbeitungsschritte zu übernehmen. Indem dieser Ausbau vorzugsweise in natürlicher Sprache erfolgt, das System also im Klartext sagt, welcher Teil der Aufgabenstellung nicht gelöst werden kann, warum die Aufgabenstellung nicht gelöst werden kann und bei welchem Lösungsoperator die Unfähigkeit vorliegt, oder ob es überhaupt garkeinen Lösungsoperator gibt, kann das System durch Nutzung großer Sprachmodelle ständig und gezielt erweitert werden.

Ein Sonderfall liegt zum Beispiel vor, wenn der erste Agent initial nur über einen als Agenten ausgebildeten Lösungsoperator verfügt, der geeignet ist, Lösungsoperatoren zu erzeugen. Bei jedweder Aufgabenstellung (außer sie ist auf das bloße Erzeugen von Lösungsoperatoren gerichtet) wird der erste Agent somit die Unfähigkeit zur Lösung, also einen Logikbruch erkennen, und den weiteren Agenten anweisen geeignete Lösungsoperatoren zu schaffen. Nach dem Erzeugen weiterer Lösungsoperatoren kann die Aufgabenstellung gelöst werden.

Gemäß einer weiteren Ausführungsform der Erfindung, kann der erste Agent und/ oder der weitere Agent die Aufgabenstellung in Teilaufgaben aufteilen, und parallel mehrere Lösungsoperatoren veranlassen, die jeweils mindestens eine Teilaufgabe zu bearbeiten.

Demnach können Aufgaben durch den Agenten oder die Agenten des Systems parallelisiert werden, was zu einer optimierten Laufzeit des Systems führt. Besonders beim Parallelisieren kommt dem vorherigen Planen der Lösungsstrategie eine besondere Bedeutung zu, da Zwischenergebnisse mitunter einander bedingen.

Gemäß einer weiteren Ausführungsform ist der Lösungsoperator eingerichtet und ausgebildet, Patentdaten zu verarbeiten.

Patentdaten weisen aus mehreren Gründen eine besondere Hürde für die maschinelle Verarbeitung auf. So sind Patentdaten aufgrund der Allokation technischer Merkmale immanent komplexer. Dies spiegelt sich häufig in der tiefe semantischer Bäume oder Graphen wider, die die technischen Zusammenhänge von Merkmalen repräsentieren. Das Erörtern von Merkmalen und derer Zusammenhänge im Lichte der Anmeldung stellt daher für Maschinen aber auch für Menschen eine mitunter große Schwierigkeit dar. Dies gilt umso mehr aufgrund des für Patente üblichen verbreiternden Sprachduktus, dessen Begrifflichkeiten häufig vor dem Hintergrund der ansonsten verfügbaren Literatur absolut betrachtet selten vorkommen, sodass statistische Verfahren, wie Satzvervollständigungen, häufig scheitern.

Eine weitere Besonderheit von textuellen Patentdaten, also Textdaten mit hoher Informationsdichte und großer Merkmalsallokation, ist, dass bei hoher Informationskompression, wenn also Inhalte in Datenstrukturen wie beispielsweise Vektoren oder Graphen überführt werden, statistisch betrachtet mehr Information verloren geht. Besonderer Bedeutung kommt daher die Extraktion relevanter technischer Merkmale zu. Gleichfalls muss das Agentensystem berücksichtigen, dass beim Umgang mit Patentdaten, durch die größere relative Kompression verglichen mit Nichtpatentliteratur, potenziell mehr Information verloren gegangen ist.

Die technischen Vorkehrungen, also Fähigkeiten, des Lösungsoperators, damit er eingerichtet und ausgebildet ist, mit Patentdaten zu arbeiten umfassen daher:
- Fähigkeit Nutzereingaben und/ oder daran abgeleitete Verarbeitungsschritte in boolesche Operationen umzuwandeln, sodass Recherchen in einer Patentdatenbank durchgeführt werden können,
- Anschluss an eine Patentdatenbank, die einen Recherche-Index aufweist,
- Fähigkeit Nutzereingaben und/ oder daran abgeleitete Verarbeitungsschritte in einen oder mehrere Vektoren umzuwandeln, insbesondere durch ein Worteinbindungsmodell (Englisch: Embedding-Model), sodass Recherchen in einer Vektor-Patentdatenbank durchgeführt werden können,
- Anschluss an eine Vektor-Patentdatenbank, die eine Sammlung von Vektoren, die Patentdaten repräsentieren, umfasst,
- Fähigkeit Nutzereingaben und/ oder daran abgeleitete Verarbeitungsschritte in eine oder mehrere Klartextfragen umzuwandeln, sodass Recherchen in einem auf Patentdaten basierenden großen Sprachmodell durchgeführt werden können,
- Anschluss an ein großes Sprachmodell, das zu mindestens teilweise auf Patentdaten basiert,
- Analyseprompts, die vorgesehen sind, die Funktion von technischen Merkmalen zu erfragen, um gleich wirkende Bauteile aus der Anfrage und dem Zwischenergebnis zu ermitteln,
- Training anhand von Trainingsdaten, die Patentklassen repräsentieren,
- Training anhand von Trainingsdaten, die historische Rechercheergebnisse in Korrelation zum zeitgleichen Stand historischer Datensätze von Patentdaten repräsentieren,
- Abfrageverfahren und Bewertungsmetrik, die die größere Informationskompression durch eine breitere Streuung der Ergebnisse, beispielsweise in einem Vektorraum, zulässt, also verglichen mit Nichtpatentliteratur eine geringere Forderung an das verwendete Ähnlichkeitsmaß, beispielsweise eine Kosinus-Ähnlichkeit, stellt.

Ferner wird eine Datenverarbeitungsvorrichtung angegeben, die Mittel zur Ausführung des erfindungsgemäßen Verfahrens oder einer Ausführungsform des Verfahrens aufweist.

Ferner wird ein Computerprogramm oder ein computerlesbares Medium angegeben, auf dem ein Computerprogramm gespeichert ist, wobei das Computerprogramm Befehle umfasst, die bei der Ausführung des Programms durch einen Computer diesen veranlassen, das erfindungsgemäße Verfahren oder eine Ausführungsform des Verfahrens auszuführen.

Ferner wird eine Datenstruktur angegeben, die ein Maschinenlernmodell verkörpert, welches konfiguriert ist zur Verwendung im erfindungsgemäßen Verfahren oder einer Ausführungsform des Verfahrens.

Nachfolgend werden vorzugsweise Agenten, die im Verfahren eingesetzt werden können, aufgezählt.

Ein Kontrollagent ist ein Agent, der eine computerlesbare Anweisung, insbesondere in Form eines natürlichsprachigen Prompt aufweist, deren Inhalt es ist, Ergebnisse, also Zwischenergebnisse oder Abfrageergebnisse auf Inhaltliche Korrektheit zu prüfen. So lautet die Anweisung in natürlicher Sprache sinngemäß: "Greife das Ergebnis auf und prüfe nach den Regeln der Logik, ob sich dieses inhaltlich aus den mitgelieferten Textstellen ergibt", wobei mit Textstelle Zitatstellen gemeint sind, die vom Lösungsoperator oder Agenten, der das Ergebnis bereitgestellt hat, geliefert werden. Ferner verfügt der Kontrollagent vorzugsweise über eine computerlesbare Anweisung, insbesondere in Form eines natürlichsprachigen Prompt, zum Kontrollieren, ob ein Ergebnis auch die zugrundeliegende Fragestellung beantwortet. Demnach verfügt der Kontrollagent über technische Vorkehrungen in Form von Maschinenanweisungen, die zur Kontrolle des Systems beitragen. Ferner wird, und das Betrifft den kognitiven Aspekt der Ergebnisse, zuverlässig vermieden, dass das System halluziniert oder fabuliert, also unkorrekte oder falsche Satzvervollständigungen liefert, wie es bei der bloßen Anwendung eines großen Sprachmodells zur Informationsgewinnung der Fall sein kann. Der Kontrollagent wird daher vor allem dann eingesetzt, wenn Informationen mittels eines großen Sprachmodells gewonnen oder verarbeitet wurden.

Ein Suchagent ist ein Agent, der eine computerlesbare Anweisung, insbesondere in Form eines natürlichsprachigen Prompt aufweist, deren Inhalt es ist, Suchen nach Dokumenten basierend auf objektiven Merkmalen durchzuführen. So lautet die Anweisung in natürlicher Sprache sinngemäß: "Bilde aus den gegebenen Informationen eine geeignete Suchanfrage in boolescher Logik", oder "Fasse die Suchanfrage, ohne technische Merkmale auszulassen zusammen und leite die Zusammenfassung an einen für Volltextsuchen geeigneten Agenten weiter". Der Suchagent kann aus der Nutzereingabe auch Filter ableiten. So wird eine Suchanfrage "Liste alle europäischen Patentanmeldungen aus dem Jahr 2023 auf" zu folgenden für eine Datenbank verwertbare Filter führen:
- Das Veröffentlichungsland soll EP lauten
- Das Publikationslevel soll auf Anmeldungen, also A-Schriften beschränkt sein

Die Restriktion auf das Jahr 2023 lässt offen, ob es sich um den Anmeldetag oder den Veröffentlichungstag handelt. Somit wird der Agent entweder eines von beiden nutzen und dem Bediener dies mitteilen oder aber er wird die Rückfrage stellen, so wie es für alle Agenten vorgesehen ist, dass offene Fragen entweder nach bekanntem Usus zu beantworten sind oder, dass Rückfragen zu stellen sind.

Eine exemplarische natürlichsprachige Beschreibung der Fähigkeiten des Suchagenten lautet, sofern das System beispielsweise für Patentinformationszwecke verwendet, wird: "Dieser Agent verfügt über Fähigkeiten Patentrecherchen durchzuführen. Dieser Agent empfängt textuelle Fragestellung und ruft geeignete Lösungsoperatoren auf, denen er die Anweisung zur Recherche gibt".

Ein Analyseagent ist ein Agent, der eine computerlesbare Anweisung, insbesondere in Form eines natürlichsprachigen Prompt aufweist, deren Inhalt es ist, Statistiken anzulegen und zu interpretieren.

Ein Berichtagent ist ein Agent, der eine computerlesbare Anweisung, insbesondere in Form eines natürlichsprachigen Prompt aufweist, deren Inhalt es ist, Berichte zu Ergebnissen oder zur Beantwortung selbst zu erstellen.

Ein Agent kann auch mehrere der vorgenannten Funktionen aufweisen. Es gilt also nicht zwangsläufig eine eins zu eins Beziehung zwischen der Funktionalität und der Anzahl an Agenten.

### KURZE BESCHREIBUNG DER ZEICHNUNGEN

Zum besseren Verständnis der Erfindung wird auf die folgenden Zeichnungen verwiesen:
- Fig. 1:: Ein Verfahren gemäß der Erfindung
- Fig. 2:: Eine ausführungsform des erfindungsgemäßen Verfahrens
- Fig. 3: Eine Darstellung unterschiedlicher hierarchischer Ordnung

### AUSFÜHRLICHE BESCHREIBUNG

Im Folgenden werden repräsentative Ausführungsformen, die in den beigefügten Zeichnungen dargestellt sind, erläutert. Die abgebildeten Ausführungsformen und die folgende Beschreibung beziehen sich auf Beispiele, die nicht dazu gedacht sind, die Ausführungsformen auf eine bevorzugte Ausführungsform zu beschränken.

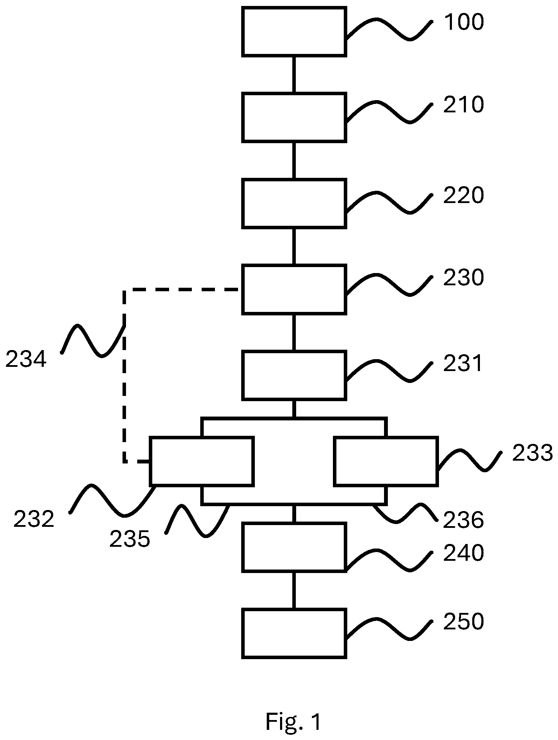

Fig. 1 zeigt ein Ablaufdiagramm des erfindungsgemäßen Verfahrens. Ausgehend von einer Nutzereingabe überträgt in Schritt 100 ein Client die Aufgabenstellung des Nutzers an einen Server. Der Server empfängt die Aufgabenstellung und verarbeitet diese in Schritt 210 durch einen ersten Agenten, um von der Aufgabenstellung ausgehend ein Abfrageergebnis, also eine Antwort, zu erzeugen. Hierzu findet in Schritt 220 die Wahl eines geeigneten Lösungsoperators statt. Bei der Wahl berücksichtigt der erste Agent die Fähigkeiten der ihm zur Verfügung stehenden Lösungsoperatoren, welche vorzugsweise in natürlicher Sprache vorliegen. Nun, da der erste Agent einen Lösungsoperator identifiziert hat, der der Fähigkeitsbeschreibung nach geeignet ist, die Aufgabe oder zumindest eine Teilaufgabe zu lösen, erhält der gewählte Lösungsoperator seinen Arbeitsauftrag in Schritt 230. Der Lösungsoperator wird also veranlasst, den Verarbeitungsschritt durchzuführen und Zwischenergebnisse zu liefern. Sobald der Lösungsoperator die Aufgabe oder Teilaufgabe erledigt hat, er also Zwischenergebnisse liefern kann, sendet er diese zurück zum, ersten Agent. Dieser vollzieht dann den Schritt 231, in dem ein Zustandsindikator gesetzt wird. Hierbei kommt es zu einem Abzweig. Erachtet der Agent die inhaltliche Prüfung für notwendig, so wird er Schritt 232 durchführen und eine inhaltliche Kontrolle der Zwischenergebnisse vornehmen. Führt diese zur Akzeptanz der Zwischenergebnisse, so wird der Agent die Zwischenergebnisse entlang des Prozesspfades 235 zum Erstellen der Abfrageergebnisse in Schritt 240 weiterleiten. Sollte der erste Agent die Zwischenergebnisse zurückweisen, beispielsweise weil diese Mangelhaft sind, leitet der erste Agent das Durchlaufen der Zwischenergebnis-Schleife 234 ein, sodass das Zwischenergebnis durch den Lösungsoperator neu gefasst wird. Entscheidet sich der erste Agent dazu, au eine inhaltliche Kontrolle zu verzichten, wird Schritt 233 vollzogen, indem die Hypothese angewendet wird, dass die Aufgabe oder Teilaufgabe gelöst wurde. Dies führt dann zum Pfad 236, entlang dem die Zwischenergebnisse zum Erstellen der Abfrageergebnisse in Schritt 240 weitergeleitet werden. Das Setzen der Annahme, dass die Aufgabenstellung gelöst wurde, kommt dem Verfahren gleich, bei dem kein Zustandsindikator gesetzt werden kann. So ist es möglich, dass der erste Agent generell die Anweisung erhält stets davon auszugehen, dass die Aufgabenstellung gelöst wurde. in Schritt 240 werden die Abfrageergebnisse nun basierend auf dem Zwischenergebnis oder den Zwischenergebnissen gebildet, sodass das Abfrageergebnis anschließend in Schritt 250 vom Server an den Client bereitgestellt werden kann.

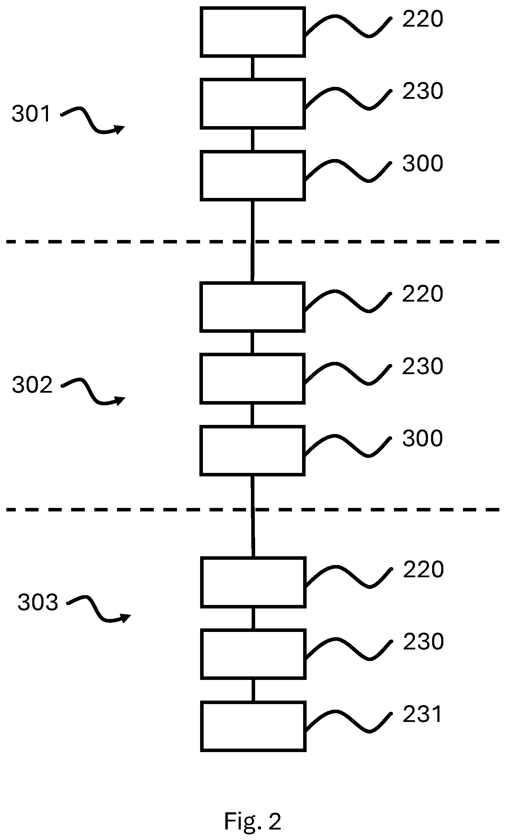

Fig. 2 zeigt ein Ablaufdiagramm einer Ausführungsform, bei der der Lösungsoperator selbst wieder ein Agent ist. In der ersten Ebene 301, und hiermit ist keine Hierarchiestufe gemeint, wird ein Lösungsoperator, wie im Rahmen von Fig. 1 beschrieben, ausgewählt. Dieser Erhält dann wieder den Arbeitsauftrag in Schritt 230. Nun stellt sich für den als Lösungsoperator ausgewählten Agenten der ersten Ebene 301 heraus, dass er allein nicht in der Lage ist die Aufgabe zu lösen, sondern mindestens einen weiteren Agent beauftragen muss. somit erfolgt in der zweiten Ebene 302 abermals die Auswahl eines geeigneten Agenten 220 sowie die Beauftragung dieses Agenten, Zwischenergebnisse zu erzeugen 230. Allerdings erkennt auch der Agent in Ebene 302, dass er sich den Fähigkeiten weiterer Agenten bedienen muss. Somit wählt der Agent aus Ebene 302 nun einen einen Agenten aus der dritten Ebene aus 303 und beauftragt diesen Agent mit der Lösung. Der Agent in der dritten Ebene erkennt, dass er selbst alle notwendigen Lösungsoperatoren in Form von Computerfunktionen aufweist, wählt diese iterativ und/oder parallelisiert aus und wendet daraufhin einen Zustandsindikator an. Zuletzt werden die Ergebnisse, was in Fig. 2 nicht dargestellt ist, durch die einzelnen Ebenen 302 und 301 zurückgegeben. Da bereits ein Zustandsindikator gesetzt wurde, können die höheren Ebenen hierauf verzichten. Alternativ ist es sinnvoll, wenn grundsätzlich nur die höheren Ebenen oder die höchste Ebene 301 den Zustandsindikator setzen.

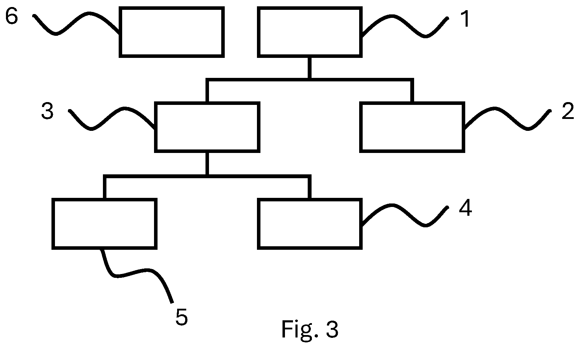

Fig. 3 zeigt eine hybride Struktur mehrerer Lösungsoperatoren-Konfigurationen und mehrerer hierarchischer Anordnungen. Der erste Agent 1 verfügt über einen als Computerfunktion ausgebildeten Lösungsoperator 2 sowie einen weiteren Agenten 3. Der erste Agent und der weitere Agent stehen in einem vertikalen Hierarchieverhältnis, was bedeutet, dass der weitere Agent dem ersten Agenten direkt berichten muss, also seine Zwischenergebnisse direkt an den ersten Agenten1 liefern muss. Der nebengeordnete Kontrollagent 6 hingegen befindet sich auf derselben Hierarchiestufe, wie der erste Agent 1, sodass der Kontrollagent den ersten Agenten zwar kontrolliert, diesem aber nicht übergeordnet ist. Der weitere Agent 3 verfügt über zwei als Computerfunktionen ausgestaltete Lösungsoperatoren 4 und 5. Die jeweils verfügbaren Fähigkeiten also die Fähigkeitsprofile ergeben sich aufgrund der eigenen Fähigkeiten, aber auch aufgrund der Fähigkeiten der darunterliegenden Stufen. So verfügt der erste Agent über die Fähigkeiten der Lösungsoperatoren 2 und 3, wohingegen der weitere Agent über die Lösungsoperatoren 4 und 5 verfügt. Dieser Tatsache wird bei der Formulierung von Aufgaben und Teilaufgaben Rechnung getragen, so wird auf höchster Ebene in aller Regel abstrahiert, wohingegen mit zunehmender Tiefe in der Hierarchie spezifische Aufgaben erteilt werden. Ist es bei der Aufgabenstellung "Führe eine Einspruchsrecherche gegen die ABC123A1 durch" für den ersten Agent nur relevant, dass einer seiner Lösungsoperatoren die Deklaration "Ist geeignet Patentrecherchen durchzuführen" trägt, so ist es für den tieferliegenden Agenten 3, wenn dieser als geeigneter Lösungsoperator ausgewählt wurde, relevant zu wissen, ob einer seiner Lösungsoperatoren geeignet ist Filteranfragen spezieller Art zu erzeugen.

Fig. 3 zeigt eine potenziell mögliche Mischung einer hierarchischen Anordnung von Agenten mit einer nebengeordneten Anordnung von Agenten.

### BEZUGSZEICHENLISTE

- 1: Erster Agent
- 2: Lösungsoperator als Computerfunktion
- 3: Lösungsoperator als Agent
- 4: Lösungsoperator als Computerfunktion
- 5: Lösungsoperator als Computerfunktion
- 6: Kontrollagent
- 100: Empfang von Aufgabenstellung
- 210: Verarbeiten von Aufgabenstellung
- 220: Auswählen eines Lösungsoperators
- 230: Arbeitsauftrag an Lösungsoperator
- 231: Anwendung Zustandsindikator
- 232: Inhaltliche Kontrolle
- 233: Lösungshypothese
- 234: Zurückweisung der Zwischenergebnisse und Zwischenergebnis-Schleife
- 235: Akzeptanz der Zwischenergebnisse
- 236: Gesetzte Lösungshypothese
- 240: Erstellen Abfrageergebnisse
- 250: Bereitstellen Abfrageergebnisse
- 300: Ebenenwechsel
- 301: Erste Ebene
- 302: Zweite Ebene
- 303: Dritte Ebene

## Patentansprüche

1. Ein computerimplementiertes Verfahren, welches zumindest die folgenden von einem oder mehreren Servern durchgeführten Schritte umfasst:
(a) Empfangen einer Aufgabenstellung von einem Client;
(b) Verarbeiten der Aufgabenstellung durch einen ersten Agent, der als Maschinenlernmodell ausgebildet ist, um ein Abfrageergebnis zu erzeugen, wobei das Verarbeiten umfasst:
(i) Auswählen eines Lösungsoperators für zumindest einen zum Verarbeiten der Aufgabenstellung geeigneten Verarbeitungsschritt; wobei das Auswählen zumindest teilweise basierend auf einer textuellen Beschreibung der Fähigkeit des Lösungsoperators erfolgt;
(ii) Veranlassen, dass der ausgewählte Lösungsoperator den zumindest einen Verarbeitungsschritt zu Zwischenergebnissen verarbeitet;
(iii) Anwenden eines Zustandsindikators umfassend:
I) Zurückempfangen der vom Lösungsoperator erzeugten Zwischenergebnisse durch den ersten Agent und Beurteilen der Zwischenergebnisse durch den ersten Agent dahingehend, ob die Aufgabenstellung gelöst ist und, falls die Aufgabenstellung nicht gelöst ist, erneutes Durchführen der Schritte (i) bis (iii), oder
II) setzen der Annahme, dass die Aufgabenstellung gelöst ist;
(iv) Erstellen des Abfrageergebnisses durch den ersten Agent; und
(c) Bereitstellen des Abfrageergebnisses an den Client.

2. Verfahren nach Anspruch 1, wobei der Lösungsoperator ein weiterer Agent ist, der als Maschinenlernmodell ausgebildet ist, wobei der weitere Agent seinerseits den Verfahrensschritt (b) gemäß Anspruch 1 durchführen kann.

3. Verfahren nach Anspruch 2, wobei der weitere Agent hierarchisch unter demjenigen Agent steht, der den weiteren Agent als Lösungsoperator ausgewählt hat, oder wobei der weitere Agent hierarchisch neben demjenigen Agent steht, der den weiteren Agent als Lösungsoperator ausgewählt hat.

4. Verfahren nach Anspruch 1 oder 2, wobei das Maschinenlernmodell des ersten Agent und/ oder das Maschinenlernmodell des weiteren Agent ein großes Sprachmodell oder ein neuronales Netz ist.

5. Verfahren nach einem der Ansprüche 1 bis 4, wobei der Lösungsoperator, eine Computerfunktion ist.

6. Verfahren nach einem der Ansprüche 1 bis 5, wobei der Lösungsoperator selbst Wert des Zwischenergebnisses ist.

7. Verfahren nach einem der Ansprüche 1 bis 6, wobei als Zwischenergebnisse Fähigkeitsprofile der Lösungsoperatoren zurückgegeben werden, mittels denen der Agent die generelle Lösbarkeit der Aufgabenstellung beurteilen kann, noch bevor mit der tatsächlichen Bearbeitung der Aufgabenstellung begonnen wird.

8. Verfahren nach einem der Ansprüche 1 bis 7, wobei das Verarbeiten der Aufgabenstellung durch den ersten Agent das Planen eines globalen Lösungspfades umfasst, noch bevor das Auswählen ein Lösungsoperators erfolgt, wobei der Lösungspfad von den durch den ersten Agenten erwarteten Abfrageergebnissen ausgehend rückwärts geplant wird, oder, wobei der Lösungspfad von einem ersten Verarbeitungsschritt ausgehend vorwärts geplant wird.

9. Verfahren nach einem der Ansprüche 1 bis 8, wobei der erste Agent geeignet ist Informationen, die der Aufgabenstellung nicht entnommen werden können, aber zur Bearbeitung der Aufgabenstellung notwendig sind, von einem Bediener einzuholen, insbesondere derart, dass dem Bediener ein Vorschlag unterbreitet wird, wie die fehlenden Informationen durch den ersten Agent oder den weiteren Agent eingeholt werden könnten.

10. Verfahren nach einem der Ansprüche 1 bis 9, wobei das Maschinenlernmodell des ersten Agenten und/ oder das Maschinenlernmodell des weiteren Agenten geeignet ist, Zwischenergebnisse einer Plausibilitätsprüfung zu unterziehen, wobei im Falle unplausibler Zwischenergebnisse die Lösungsoperatoren, die diese Zwischenergebnisse geliefert haben, inhaltlich begutachtet und berichtigt werden können oder Problemstellen an einen übergeordneten Administrator mittels einer Informationswiedergabevorrichtung kommuniziert werden.

11. Verfahren nach einem der Ansprüche 1 bis 10, wobei der erste Agent und/ oder der weitere Agent die Aufgabenstellung in Teilaufgaben aufteilen kann, und parallel mehrere Lösungsoperatoren veranlassen kann, die jeweils mindestens eine Teilaufgabe zu bearbeiten.

12. Verfahren nach einem der Ansprüche 1 bis 11, wobei der Lösungsoperator eingerichtet und ausgebildet ist, Patentdaten zu verarbeiten.

13. Eine Datenverarbeitungsvorrichtung, umfassend Mittel zur Ausführung des Verfahrens nach irgendeinem der Ansprüche 1 bis 12.

14. Ein Computerprogramm oder ein computerlesbares Medium, auf dem ein Computerprogramm gespeichert ist, wobei das Computerprogramm Befehle umfasst, die bei der Ausführung des Programms durch einen Computer diesen veranlassen, das Verfahren nach irgendeinem der Ansprüche 1 bis 12 auszuführen.

15. Eine Datenstruktur, die ein Maschinenlernmodell verkörpert, welches konfiguriert ist zur Verwendung im Verfahren nach irgendeinem der Ansprüche 1 bis 12.
